# EUROPEAN PATENT APPLICATION

(11) **EP 4 660 880 A1**
(43) Date of publication of application: **10.12.2025**
(21) Application number: 24180487.1
(22) Date of filing: 06.06.2024
(51) Int. Cl.: G06N 3/0475, G06N 5/025, G06N 20/00, G06F 11/36

(54) **METHOD FOR FILTERING USER FEEDBACK AND/OR OUTPUT OF A MACHINE LEARNING MODEL**

(71) Applicant: ABB SCHWEIZ AG, 5400 Baden (CH)
(72) Inventor: BORRISON, Reuben, 68782 Brühl (DE); ALEKSY, Markus, 67065 Ludwigshafen (DE); DIX, Marcel, 78476 Allensbach (DE)
(74) Representative: Maiwald GmbH

(57) **Abstract**

Computer implemented method for filtering user feedback and/or output of a machine learning model, comprising: providing a filter for filtering user feedback and/or output of a machine learning model; receiving user feedback and/or output of the machine learning model; filtering the user feedback and/or the output with the filter and determining a filtering result, wherein the filtering result comprises at least a detected error; providing the filtering result for further processing.

## Description

### FIELD OF INVENTION

The present invention relates to a computer implemented method for filtering user feedback and/or output of a machine learning model, to a data processing device, to a computer program and to a computer readable medium.

### BACKGROUND OF THE INVENTION

Machine learning models are widely used in different areas, for example, in plants and building automation. Machine learning models are well known in the state of the art. These machine learning models are trained by training data and also by user feedback. However, such a training may be a challenging task and depends on the quality of the training data and the feedback.

It has now become apparent that there is a further need to provide a possibility for filtering user feedback and/or output of a machine learning model.

### SUMMARY OF THE INVENTION

In view of the above, it is an object of the present invention to provide a method for filtering user feedback and/or output of a machine learning model, in particular it is an object of the present invention to provide an improved method for filtering user feedback and/or output of a machine learning model. These and other objects, which become apparent upon reading the following description, are solved by the subject matter of the independent claims. The dependent claims refer to preferred embodiments of the invention.

In one aspect of the present disclosure, a computer implemented method for filtering user feedback and/or output of a machine learning model is provided, comprising:
providing a filter for filtering user feedback and/or output of a machine learning model;
receiving user feedback and/or output of the machine learning model;
filtering the user feedback and/or the output with the filter and determining a filtering result, wherein the filtering result comprises at least a detected error;
providing the filtering result for further processing.

In an embodiment, the filter may be a rule-based filter system.

In an embodiment, the filter may check at least one of: class type information, relation type information.

In an embodiment, the filter may be adaptable by a user.

In an embodiment, the filter may comprise a first trained model.

In an embodiment, the first trained model may be one of the following: an autoencoder model, an anomaly detection model.

In an embodiment, the further processing may comprise fixing the detected error and providing a fixed error.

In an embodiment, the fixing may be based on a second trained model.

In an embodiment, the second trained model may be a masked language model.

In an embodiment, the fixed error may be provided to a user.

In an embodiment, the fixed error may be fed into the machine learning model.

In an embodiment, the machine learning model may be one of the following: a generative Al model, a generative machine learning model, a large language model, a natural language model.

A further aspect of the present disclosure relates to a data processing device comprising means for carrying out the method described above.

A further aspect of the present disclosure relates to a computer program comprising instructions, which, when the program is executed by a processor, cause the processor to carry out the method described above. The processor can typically be part of a computer.

A further aspect of the present disclosure relates to a non transitory computer-readable storage medium comprising instructions which, when executed by a processor, cause the processor to carry out the method described above.

### DEFINITIONS

The term feedback, as used herein, is to be understood broadly and may relate to an assessment of a user on a prediction of a machine learning model.

The term output of a machine learning model is to be understood broadly and may relate to a prediction of a machine learning model. The output may for example be a relation between entities in a building, or a layout of a building.

The term filtering, as used herein, is to be understood broadly and may relate to determine or detect an error in feedback and/or in an output of a machine learning model.

The term machine learning model (i.e. ML model), as used herein, is to be understood broadly and may relate to a mathematical representation of patterns and relationships in data, constructed using algorithms. The ML model may be trained on input data to make predictions or decisions without being explicitly programmed to perform the task. The training process may involve feeding the ML model with labelled data (input-output pairs), allowing it to learn the underlying patterns and associations. The machine learning model may for example be a model for describing a building according to the standard Brick schema. The machine learning model may for example be fed with/based on process building management system (BMS) metadata.

The term filter, as used herein, is to be understood broadly and may relate to a software unit configured to filter a feedback and/or an output of a machine learning model in order to detect an error.

The term filtering result, as used herein, is to be understood broadly and may relate result after applying the filter. The filtering result may comprise a detected error in case an error is detected. The filtering result may comprise as a result that "no errors" are detected. The filtering result may comprise metadata corresponding to the detected error. The metadata may comprise information about the type or class of the detected error. The detected error may be a wrong class type information or a wrong relation type information.

The term rule-based filter system, as used herein, is to be understood broadly and may relate to one or more rules used to check the feedback and/or the output of a machine learning model. A rule may define a class type of the machine learning model. A rule may define a relation type of the machine learning model. Such a rule may be from a schema (e.g. Brick schema). Such a rule may be defined by a user. Such a rule may be adapted by a user. The term adaptable, as used herein, preferably may relate to an adaption of a rule by a user.

The term class type information, as used herein, is to be understood broadly and may relate to a template for creating objects. The class type may for example be house. Objects of the class type house may relate to entities in the house, such as room, floor, window, climate system, heater, sensor, control unit etc. ,

The term relation type information, as used herein, is to be understood broadly and may relate to a structure that defines a characteristics of a relation between one or more entities of a class. For example, a sensor is located in a room of a house and not vice versa.

The term autoencoder model, as used herein, is to be understood broadly and may relate to a type of artificial neural network used for unsupervised learning, particularly in the realm of feature learning and data compression. The autoencoder model may be configured to generate output data from input data. The output data may represent the training data (i.e. data used to train the machine learning model and/or autoencoder model). Such an autoencoder model may be configured in case bad feedback/output is given to it, to generate an output (e.g. according to the Brick schema) closer to the training data. The autoencoder model may generate a difference between the output and the feedback and/or output generated by machine learning model. If the difference is above a threshold an alert can be raised indicating that the output/feedback may not be correct. It may be, however, that it is correct, and it is a false alarm, but nevertheless this can help re-verify the feedback and thus can also help in updating the ML-model itself. The autoencoder model may be used to detect an error in the feedback and/or the output. In other words, an autoencoder will generate the output closer to the training data based on input data. There has to be a subtraction done between input and output to see the difference, if the difference is huge then probably the feedback is wrong. Subtraction can be done for example using embeddings (numeric semantic representation of text) to find the cosine distance between the input and output.

The term anomaly detection model, as used herein, is to be understood broadly and may relate to an an outlier detection model. The anomaly detection model may be a machine learning model designed to identify unusual patterns or instances in data that do not conform to expected behavior. Anomalies, or outliers, can be caused by various factors such as errors in data collection, fraudulent activities, system failures, or rare events. The anomaly detection model may be used to detect an error in the feedback and/or output.

The term fixing, as used herein, is to be understood broadly and may relate to a correcting of a detected error in order provided a fixed error. For example, fixing may mean to change an object of a class type from room to sensor. For example, fixing may mean to change a relation type. An entity may for example be classified as a zone but in general it is of a class type room according to the Brick schema and/or the haystack schema. The method fixes such an error.

The term trained model, as used herein, is to be understood broadly and may relate to any model trained with training data. The trained model may be a machine learning model.

The term masked language model, as used herein, may relate to a type of language model used in natural language processing (NLP) that learns to predict missing or masked words within a sentence. It's a variant of the broader category of autoregressive language models like GPT (Generative Pre-trained Transformer) models.

The term large language model (LLM), as used herein, may relate to a type of machine learning model specifically designed to understand and generate human-like text.

The term generative Al model, used herein, may relate to a type of artificial intelligence system that may have the ability to generate new data or content that is similar to, but not exactly the same as, the data it was trained on. A generative Al model may be capable of creating new content (e.g. description of a building) based on patterns and structures learned from a dataset during the training process. The generative AI models may be one of the following: Generative Adversarial Network (GAN), Variational Autoencoders (VAE), and autoregressive models like OpenAl's GPT series.

The term generative machine learning model, as used herein, may relate to a type of model designed to create new data samples that are similar to those in the training dataset.

Units or devices may include one or more interface circuits. In some examples, the interface circuits may include wired or wireless interfaces that are connected to a local area network (LAN), the Internet, a wide area network (WAN), or combinations thereof. The functionality of any given device or unit of the present disclosure may be distributed among multiple units or devices that are connected via interface circuits.

Devices according to one or more example embodiments may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof.

Any disclosure and embodiments described herein relate to the methods, the devices, the computer program and computer-readable medium lined out above and vice versa.

Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "initiating or causing to perform an action" includes any processing signal that triggers a computing device to perform the respective action.

### BRIEF DESCRIPTION OF THE DRAWINGS

In the following, the present disclosure is described exemplarily with reference to the enclosed figures, in which
- **Figure 1**: shows a flow diagram of an example method for filtering user feedback and/or output of a machine learning model; and
- **Figure 2**: shows a schematic illustration of an example system for filtering user feedback and/or output of a machine learning model.

### DETAILED DESCRIPTION OF EMBODIMENTS

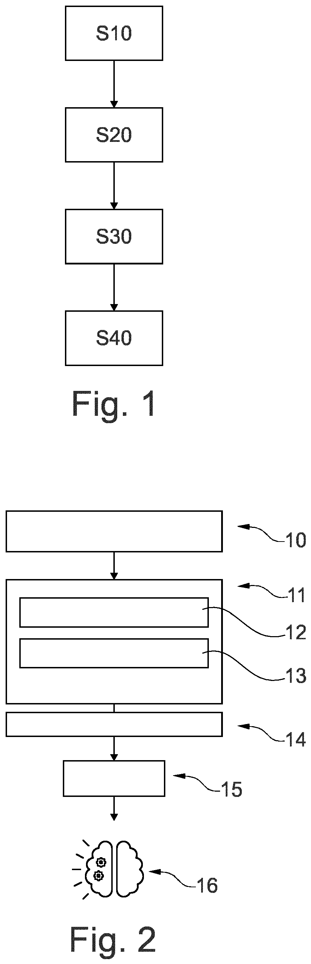

Figure 1 shows a flow diagram of an example method for filtering user feedback and/or output of a machine learning model.

Step S 10 comprises providing a filter for filtering user feedback and/or output of a machine learning model. The machine learning model may be in the present example an information model for a building that is based on BMS metadata. The machine learning model may be used to describe a behaviour of the building. The output of the machine learning model may be the standard information model (e.g. BRICK or haystack) based on natural language BMS meta data as input. The filter is in the present example an autoencoder model. The autoencoder model is trained to check the class type information and the relation type information.

Step S 20 comprises receiving user feedback and/or output of the machine learning model. The user feedback may be received by means of an HMI. The output may be received by an interface. The feedback may comprise for example that a relation between two entities is amended. The amended relation may comprise a wrong relation type information. The output may comprise for example that an entity has a wrong class type information.

Step S 30 comprises filtering the user feedback and/or the output with the filter and determining a filtering result, wherein the filtering result comprises at least a detected error. The autoencoder model determines as filtering result in the present example that both the output and the feedback comprise each a detected error.

Step S 40 comprises providing the filtering result for further processing. In the present example, the further processing comprises fixing the detected errors and providing fixed errors. The fixed error may comprise in the present example corrected relation type information and a corrected class type information. The fixing is in the present example conducted by means of a masked language model. The fixed errors may be fed into the machine learning model. The fixed errors may be provided to a user by an HMI. The user may then have the possibility to review the fixed errors. The user may accept or reject the fixed error. The accepted fixed error may be fed into the machine learning model.

Figure 2 shows a schematic illustration of an example system for filtering user feedback and/or output of a machine learning model.

The system comprises a receiving unit 10 configured to receive user feedback and/or output of a machine learning model 16. filter 11. The system comprises further a filter 11. The filter 11 receives from the receiving unit 10 user feedback and/or output of a machine learning model 16. The machine learning model 16 is trained to convert natural language raw BMS metadata to a standard information model such as BRICK schema. The filter 11 comprises a rule based filter system 12 and an autoencoder model 13. The filter 11 filters the user feedback and/or the output of the machine learning model 16 in order to detect errors. The detected errors are provided to masked learning model 14. The masked learning model 14 fixes the detected errors. The fixed errors are fed by a training unit 15 into the machine learning model. The training unit 15 is configured to feed feedback (i.e. fixed errors) into the machine learning model 16.

In the following, a summary of the main effects and main advantages of the present disclosure is provided:
Large language models (LLMs) can often hallucinate and can be corrected using the feedback from the users. The feedback can be misleading sometimes which can lead to poor performance of the LLMs. As there can be consecutively many users using the LLM, there is a need to check the output/feedback in an automated way. The method/ system may automatically check the output/feedback and also to fix the detected errors to provide them as a suggestion to the user. This way the output of the LLM can be improved and the feedback given by the user can be filtered and screened for training/finetuning of the LLMs.

LLMs can often hallucinate and provide some wrong answers. On the other hand, users can provide feedback to correct the output of LLMs on which the LLMs can learn. The problem may be that the users can also provide bad feedback which can make the model worse. This may be intentional or un-intentional. Thereby, checking and filtering feedback from the user may be as important as checking and filtering the output of LLM.

To check the output and feedback provided by the LLM, there can be a rule-based system which can be configured based on the domain the LLM was trained on. In addition, there can be a machine learning (ML)-based system which can be trained to detect good/bad output/feedback. This way an alert can be raised to check if bad output/feedback was provided by the LLM.
Beside detecting the issues in output/feedback, a masked LLM or similar (like next word generator LLM, ML model) can be used to fix the flagged errors and provide suggestion in the output/feedback.

To check the output/feedback provided by the LLM the following steps may be applied:
1. Filter the bad/improper feedback using a rule-based system defined by the users.
2. Alternatively, or consecutively filter the bad/improper feedback/output with the help of an ML-model.
3. Fix/generate the detected error using a masked LLM.
4. Get it reviewed by a domain expert.
5. The filtered and reviewed feedback can be used for training/finetuning of the LLMs.

The system may consist of the following components, depicted in Figure 2, which are used in the order as listed below at the example of conversion of unstructured raw building metadata to a structured information model (for e.g. using Brick schema):
The system can be used for detection and mitigation of bad output or feedback. The output/feedback can be given to rule-based system, which can consist of rules for checking the information model such as, if the class type information of the raw data exists in the corresponding schema or not, or relation types exists in the schema or not. These rules can be defined by the users to check the information model based on their state of the practice as well.

An alternative or consecutive step can be checking the generated information model text with the help of a ML-model as well. The idea is that some ML algorithms such as autoencoders can be used to generate output from the input data, in a way that the output data represents the training data. So, if such a model is trained on correct examples of Brick schema, then even if a bad feedback/output is given to it, it will try to generate a brick schema closer to the training data and generate a difference between input and output. If the difference is above a threshold an alert can be raised indicating that the output/feedback may not be correct. It may be, however, that it is correct, and it is a false alarm, but nevertheless this can help re-verify the feedback and thus can also help in updating the ML-model itself.

Once an error is detected in the output/feedback, this place where error is detected, can be masked and given to the subsequent ML-model to generate the fixed results. An example of such an ML model can be a masked LLM. Such a LLM can predict the masked parts of a text. Of course, such a LLM needs to be trained on text with masked learning objectives. For example, specific class types and relation types in the Brick schema can be masked and the LLM can trained to predict the text.

The corrected output/feedback can be shown to the user or can be fed directly to the retraining/finetuning pipelines.

### REFERENCE SIGNS

- S10: providing a filter
- S20: receiving user feedback and/or output
- S30: filtering user feedback and/or output and determining a filtering result
- S40: providing the filtering result

- 10: receiving unit
- 11: filter
- 12: rule based filter
- 13: autoencoder
- 14: masked large learning model
- 15: training unit
- 16: machine learning model

## Claims

1. Computer implemented method for filtering user feedback and/or output of a machine learning model, comprising:
providing a filter for filtering user feedback and/or output of a machine learning model;
receiving user feedback and/or output of the machine learning model;
filtering the user feedback and/or the output with the filter and determining a filtering result, wherein the filtering result comprises at least a detected error;
providing the filtering result for further processing.

2. The method according to claim 1, wherein the filter is a rule based filter system.

3. The method according to claim 1 or 2, wherein the filter checks at least one of: class type information, relation type information.

4. The method according to any one of the preceding claims, wherein the filter is adaptable by a user.

5. The method according to any one of the preceding claims, wherein the filter comprises a first trained model.

6. The method according to claim 5, wherein the first trained model is one of the following: an autoencoder model, an anomaly detection model.

7. The method according to any one of the preceding claims, wherein the further processing comprises fixing the detected error and providing a fixed error.

8. The method according to any one of the preceding claims, wherein the fixing is based on a second trained model.

9. The method according to any one of the preceding claims, wherein the second trained model is a masked language model.

10. The method according to any one of the preceding claims, wherein the fixed error is provided to a user.

11. The method according to any one of the preceding claims, wherein the fixed error is fed into the machine learning model.

12. The method according to any one of the preceding claims, wherein the machine learning model is one of the following: a generative AI model, a generative machine learning model, a large language model.

13. A data processing device comprising means for carrying out the method according to any one of the claims 1 to 12.

14. A computer program comprising instructions, which, when the program is executed by a processor, cause the processor to carry out the method according to any one of the claims 1 to 12.

15. A non-transitory computer-readable storage medium comprising instructions which, when executed by a processor, cause the processor to carry out the method according to any one of the claims 1 to 12.
